# FASCICULE DE BREVET EUROPEEN

(11) **EP 3 713 389 B1**
(45) Date de publication et mention de la délivrance du brevet: **22.06.2022**
(21) Numéro de dépôt: 18811662.8
(22) Date de dépôt: 19.11.2018
(51) Int. Cl.: A01D 51/00, A01D 46/00

(54) **TETE DE RAMASSAGE POUR UN DISPOSITIF DE COLLECTE DE VEGETAUX TELS QUE DES MELONS ET UN DISPOSITIF DE COLLECTE DE VÉGÉTAUX EQUIPÉ DE LADITE TETE DE RAMASSAGE**
ERNTEVORSATZ FÜR EINE ERNTEMASCHINE FÜR PFLANZEN WIE MELONEN UND ERNTEMASCHINE MIT EINEM SOLCHEN ERNTEVORSATZ
HARVESTING HEAD FOR A HARVESTING DEVICE FOR VEGETABLES LIKE MELONS AND HARVESTING DEVICE EQUIPED WITH SUCH A HARVESTING HEAD

(30) Priorité: 23.11.2017 FR 1771257
(43) Date de publication de la demande: 30.09.2020
(73) Titulaire: Ream Agri, 84750 Caseneuve (FR)
(72) Inventeur: RETAUX, Jacques, 84750 Caseneuve (FR)
(74) Mandataire: Ipside
(86) Numéro de dépôt international: PCT/IB2018/059098
(87) Numéro de publication internationale: WO 2019/102336

(56) Documents cités:
- FR-A1- 2 681 215
- FR-A1- 3 047 386
- US-A- 3 698 171
- US-A- 6 105 352

## Description

La présente invention concerne une tête de ramassage pour un dispositif de collecte de végétaux tels que des melons et un dispositif de collecte de végétaux équipée de ladite tête de ramassage.

### DOMAINE TECHNIQUE

L'invention se situe dans le domaine technique du ramassage de végétaux, elle s'applique de manière principale à la collecte de melons détachés de la plante, toutefois la tête de ramassage pour être également utilisée pour d'autres légumes de forme sensiblement sphérique, et notamment d'autres cucurbitacées tels que la pastèque ou la courge.

### ART ANTERIEUR

A ce jour la récolte de melons dans les melonnières se fait essentiellement de manière manuelle. Pendant la période de récolte, les ouvriers agricoles parcourent les raies des melonnières et collectent les fruits arrivés à maturité.

La récolte des melons nécessite une main d'œuvre importante, il faut en effet transporter dans des seaux les melons coupés vers leur caisse de stockage ou palox, opération longue et fastidieuse.

Pour limiter les allers retours, on utilise des plateformes motorisées suivant le récoltant, ces dernières présentent différents inconvénients et notamment ne permettent pas une cadence d récolte importante.

Pour pallier aux inconvénients précités, l'inventeur de la présente demande a déposé une première demande FR2681215 relative à une machine à ramasser les melons. Cette machine comporte une tête de ramassage fixée sur un convoyeur avec un tapis directeur et des cylindres permettant de saisir le melon se trouvant au sol et d'autre part un convoyeur fixé sur un tracteur et équipé d'un palpeur, d'une rampe, de roues et d'un tapis de retenue.

Cette machine est satisfaisante sur un terrain relativement dur et plan. Toutefois, son fonctionnement est perfectible lorsque le champ présente des irrégularités ou lorsque le terrain varie en densité. Plus précisément, compte tenu de sa structure, le poids de la machine est réparti sur les roues et sur la tête de ramassage.

La force importante exercée par la tête de ramassage sur le sol fait que cette dernière peut s'enfoncer dans le sol lorsque ce dernier est meuble et empêcher le ramassage des melons.

Notamment la rampe de la machine qui poussée en direction des melons peut s'enfoncer dans la terre trop meuble ou dans une bosse de terre. Lorsque la densité du sol varie il n'est pas possible d'effectuer un réglage adaptatif de sorte que l'utilisation de cette machine n'est possible que sur un sol bien plan et de densité constante.

L'inventeur a également déposé une seconde demande dans lequel le dispositif de collecte de végétaux comporte un châssis, une unité de collecte, et des moyens d'assujettissement aptes à permettre la liaison du châssis à un véhicule agricole, ladite unité de collecte comportant des moyens de guidage des végétaux, des moyens de transfert des végétaux sur un convoyeur et au moins un convoyeur. Le dispositif décrit dans cette demande est tel que le châssis comprend des moyens de support de l'unité de collecte permettant de placer l'unité de collecte en porte à faux de manière à limiter la force exercée par l'unité de collecte sur le sol. Ce second dispositif permet une bonne adaptation à des terrains présentant des reliefs modérés et une densité de sol variable.

Toutefois dans les deux dispositifs décrits dans les demandes FR2681215 et FR1650973, la tête de ramassage pose des problèmes d'efficacité dans la collecte des melons vers le convoyeur et notamment compte tenu des dimensions ou calibres variés des melons, de la densité du terrain, de son inclinaison et également de la hauteur du couvert végétal. De fait des melons peuvent être endommagés lors de la collecte ou repoussés hors de la melonnière ou même obstruer par accumulation la tête de ramassage.

On connaît dans l'état de la technique des têtes de ramassage pour d'autres fruits tel que les myrtilles. La demande US-A-61053252 donne un exemple de dispositif comportant un cylindre pourvu de brosses entraînant les myrtilles ramassées sur un plateau à double inclinaison. Cependant, ce dispositif n'est pas adapté pour entraîner des melons. La demande FR-A-3047386 divulgue une tête de ramassage adaptée à la collecte de melons. Il est proposé de remonter les melons le long d'une rampe à l'aide d'une bande de transfert entraînée par des cylindres motorisés. Cette solution permet le ramassage automatisé des melons mais à des vitesses modérées.

La présente invention constitue un perfectionnement à la tête de ramassage des machines à ramasser les melons.

### OBJET DE L'INVENTION

Un premier but de la présente invention est de résoudre tout ou partie des problèmes techniques liés à l'art antérieur précité.

Un autre but de la présente invention est de proposer un dispositif de collecte de végétaux permettant une vitesse de collecte supérieure à 5km/h.

Un autre but de la présente invention est de proposer une tête de ramassage adapté à des terrains présentant des reliefs modérés et une densité de sol variable.

Un autre but de la présente invention est de proposer une tête de ramassage permettant la récolte de fruits de calibres différents sur le sol et un transfert vers un palox en limitant les risques de dégradations de chaque végétal.

Un autre but de la présente invention est de proposer une tête de ramassage permettant la récolte de fruits sans dégradations du couvert végétal et notamment des plantes vivaces.

### RESUME DE L'INVENTION

La présente invention concerne une tête de ramassage pour un dispositif de collecte de végétaux comportant deux joues latérales de guidage montées sur roues et des moyens de transfert des végétaux, disposés entre les joues, et aptes à déplacer les végétaux vers un convoyeur, selon l'invention, les moyens de transfert comportent des moyens d'entraînement en rotation et un plateau incliné, les moyens d'entraînement coopérant avec ledit plateau incliné pour déplacer les végétaux entre les extrémités inférieure et supérieur du plateau et les transférer vers un convoyeur.

La présente invention concerne en outre un dispositif de collecte de végétaux tels que des melons comportant un châssis, une unité de collecte, et des moyens d'assujettissement aptes à permettre la liaison du châssis à un véhicule agricole, ladite unité de collecte comportant des moyens de guidage des végétaux avec une tête de ramassage telle que précitée, des moyens de transfert des végétaux sur un convoyeur et au moins un convoyeur.

### BREVE DESCRIPTION DES FIGURES

La présente invention sera mieux comprise à la lecture d'un exemple détaillé de réalisation en référence aux figures annexées, fournies à titre d'exemple non limitatif, parmi lesquels :
- la figure 1 représente un exemple de réalisation schématique selon une vue latérale d'un dispositif de collecte équipé d'une tête de ramassage conforme à l'invention,
- la figure 2 représente en vue schématique selon une vue de dessus de la tête de ramassage,
- la figure 3 représente en vue schématique selon une vue de côté de la tête de ramassage de la figure 1 lors du ramassage d'un melon.

### DESCRIPTION DETAILLEE DE L'INVENTION

La présente invention vise à protéger une tête de ramassage et un dispositif de collecte de végétaux équipée de ladite tête de ramassage.

La tête de ramassage 2 va permettre le ramassage des melons lors du déplacement du dispositif de collecte 1. A cet effet, Les melons sont au préalable sélectionnés et coupés lorsqu'arrivés à maturité puis placés par l'ouvrier agricole selon, sensiblement, une ligne de ramassage généralement constituée par l'espace entre les melonnières.

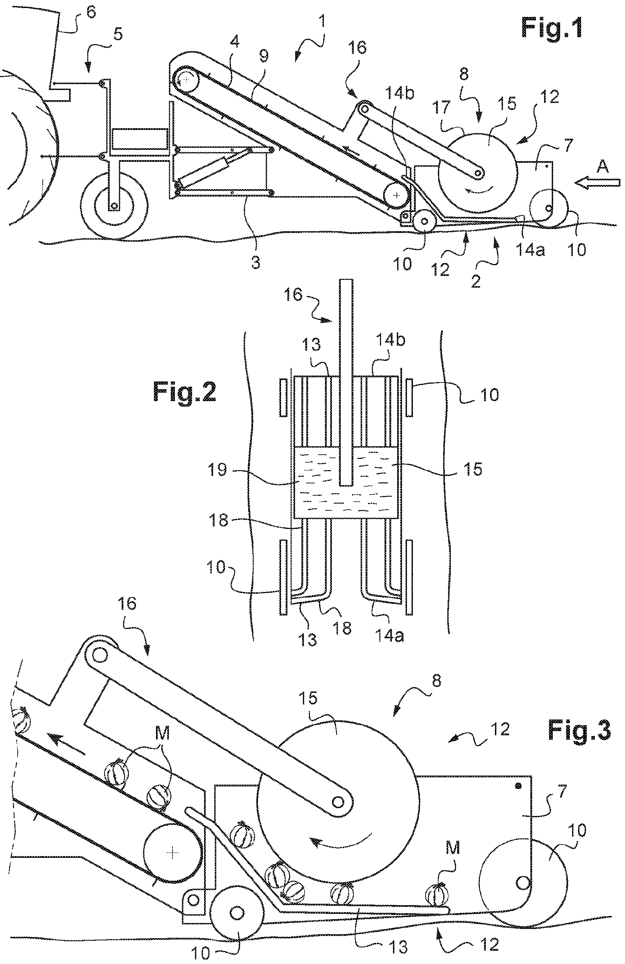

En se reportant à la figure 1, on voit représenté un dispositif de collecte de végétaux 1 avec une tête de ramassage 2.

Ce dispositif de collecte 1 comporte un châssis 3, une unité de collecte 4, et des moyens d'assujettissement 5 aptes à permettre la liaison du châssis à un véhicule agricole 6.

Le véhicule agricole 6, tel que partiellement représenté à la figure 1, peut être un tracteur ou encore tout type d'engin motorisé adapté au déplacement dans les champs.

L'unité de collecte 4 comporte à la fois la tête de ramassage 2 et des moyens de guidage des végétaux, constitués par deux joues latérales 7 et des moyens de transfert 8 des végétaux sur un convoyeur 9.

Les deux joues latérales de guidage 7 sont montées sur roues 10 de manière à positionner la tête de ramassage 1 de manière sensiblement constante lors du déplacement du véhicule 6 et d'éviter l'enfoncement dans la terre de la tête de ramassage 2. A cet effet également les joues 7 comportent des moyens d'articulation 11 aptes à autoriser un débattement angulaire entre la tête de ramassage 2 et le reste de l'unité de collecte des végétaux 4.

Selon l'invention les moyens de transfert 8 comportent des moyens d'entraînement en rotation 12 et un plateau incliné 13.
Ces moyens d'entraînement 12 coopèrent avec ledit plateau incliné 13 pour déplacer les végétaux entre les extrémités inférieure 14a et supérieure 14b du plateau et les transférer vers le convoyeur 9.

En se reportant cette fois aux figures 2 et 3, représentant la tête de ramassage 2 en vue respectivement de dessus et latérale, on voit que les moyens d'entraînement en rotation 12 comportent au moins un cylindre motorisé 15 et des moyens de positionnement 16 du cylindre 15 au-dessus du plateau 13. De manière avantageuse, ces moyens de positionnement 16 comprennent un bras assujetti au reste de l'unité de collecte 4 ou sur la tête de ramassage 2.

Ces moyens de positionnement 16 permettent de maintenir le cylindre 15 libre en rotation à une distance réglable du plateau incliné 13. Ce cylindre 13 est ensuite mis en rotation au moyen d'un moteur, prévu au niveau des moyens de positionnement 16 et entraînant l'axe supportant le cylindre 13 ou positionné dans le cylindre 13 même.

De manière avantageuse les moyens de positionnement 16 permettent d'ajuster la distance entre le plateau 13 et la surface du cylindre en fonction des végétaux à collecter. A titre d'exemple lorsque la section moyenne des melons à ramasser est de l'ordre de 10 cm, on règle la distance D entre la surface 17 du cylindre et le plateau à environ 10 cm également.

En cas de ramassage d'un melon de calibre inférieur à la distance D, les légers rebonds du melon lors du déplacement le long du plateau 13 en direction de l'extrémité haute 14b permettent de maintenir un contact avec la surface 17 du cylindre et son entraînement encore plus haut jusqu'à dépasser l'extrémité haute 14b et retomber sur la bande de convoyage du convoyeur 9.

En cas de ramassage d'un melon de calibre légèrement supérieur à cette distance D, la différence est compensée par un écrasement local de la surface du cylindre 15. A cet effet, la surface 17 du cylindre est constituée d'un matériau souple et déformable. On permet ainsi à la surface 17, en cas de contact sous pression d'un melon, de se comprimer permettant d'accepter des melons de calibre supérieur de 1 à 5 cm par rapport à la distance D. De manière avantageuse, la surface 17 du cylindre est réalisée en matériau déformable de type élastomère tel que du caoutchouc.

Selon l'invention, le plateau incliné 13 comprend une première partie de faible inclinaison permettant le ramassage des végétaux et une seconde parte d'inclinaison élevée permettant, avec la coopération des moyens d'entraînement en rotation, le transfert vers le convoyeur. Cette double inclinaison est particulièrement visible dans les figures 1 et 3.

De manière avantageuse le plateau 13 est constitué de fils métalliques 18. Une structure en fils métalliques est particulièrement intéressante car elle permet de laisser le melon rouler sur la structure tout en aplatissant les plantes vivaces sans les abimer, ces dernières se relevant une fois le premier fil, perpendiculaire à la marche du véhicule passé (dans le sens contraire à celui de l'introduction des melons représenté, sur la figure 1, par la flèche A). En plus de laisser rouler les melons et de conserver les plantes vivaces, cette structure est légère et permet d'alléger le poids de la tête de ramassage 2.

Par ailleurs, et tel que représenté à la figure 2, une structure en fils métalliques 18 permet de guider les végétaux. A cet effet, on prévoit une orientation des fils métalliques 18 pour un guidage des végétaux vers le centre et/ou l'extrémité supérieure du plateau. Une première partie des fils débute ainsi d'une joue latérale 7 en direction du centre et de l'arrière, facilitant le guidage et le chargement du melon, puis se poursuit parallèlement à l'axe des joues, constituant avec le fil voisin un rail de guidage pour le melon en direction de l'extrémité supérieure 14b.

Le fonctionnement de la tête de ramassage est relativement aisé, il consiste à déplacer, une fois les réglages de position réalisés et le cylindre mis en rotation, la tête de ramassage 2 en direction des melons. Les melons, référencés M sur la figure 3, sont soulevés par l'extrémité inférieure 14a du plateau 13 en direction du cylindre 15. Le cylindre 15 propulse le melon vers le haut du plateau 13, ce dernier tombe ensuite par gravité sur la bande du convoyeur 9.

Pour améliorer le contact entre le melon et la surface 17 du cylindre, on prévoit que cette dernière comporte des reliefs 19 favorisant le déplacement des végétaux dans le sens de rotation du cylindre 15. Ces reliefs 19 peuvent notamment prendre la forme de chevrons.

L'invention vise également à protéger un dispositif de collecte 1 de végétaux tels que des melons comportant un châssis 3, une unité de collecte 4, et des moyens d'assujettissement 5 aptes à permettre la liaison du châssis à un véhicule agricole 6. L'unité de collecte du dispositif de collecte 1 comportant une tête de ramassage telle que décrite plus haut dans la demande.

De manière avantageuse on prévoit en outre des moyens de support de l'unité de collecte permettant de placer l'unité de collecte 4 en porte à faux de manière à limiter la force exercée par la tête de ramassage 2 sur le sol.

Le dispositif de collecte, incluant la tête de ramassage 2 telle que décrite plus haut, permet de récolter de manière efficace et sure les légumes tels que des melons, même en cas d'irrégularités du sol tant en termes de différence de densités que de différences de niveaux, et même en cas de différence dans le calibre des légumes à collecter.

Bien entendu, d'autres caractéristiques de l'invention auraient également pu être envisagées sans pour autant sortir du cadre de l'invention définie par les revendications ci-après.

A titre d'exemple les moyens d'entraînement pourront comporter non pas un mais au moins deux cylindres de sections différentes et disposés sur un même axe de rotation. Cette disposition particulière permet d'assurer la collecte de végétaux de calibres très différents. On peut également prévoir que le cylindre présente le long de son axe une section variable avec notamment une section décroissante du centre du cylindre vers ses extrémités.

## Revendications

1. Tête de ramassage pour un dispositif de collecte de végétaux choisis parmi les melons ou les cucurbitacées et comportant deux joues latérales de guidage (7) montées sur roues (10) et des moyens de transfert (8) des végétaux, disposés entre lesdites joues (7), et aptes à déplacer les végétaux vers un convoyeur, les moyens de transfert (8) comportant des moyens d'entraînement en rotation (12) et un plateau incliné (13), et dans laquelle les moyens d'entraînement (12) comportent au moins un cylindre motorisé (15) et des moyens de positionnement (16) du cylindre au-dessus du plateau (13),**caractérisé en ce que** :
- le plateau comporte une double inclinaison, une première partie de faible inclinaison permettant le ramassage des végétaux et comportant une extrémité inférieure (14a), et une seconde parte d'inclinaison élevée comportant une extrémité supérieure (14b) et permettant, avec la coopération des moyens d'entraînement en rotation (12), le transfert vers un convoyeur, et **en ce que**
- les moyens de positionnement (16) du ou des cylindres permettent d'ajuster une distance D entre le plateau (13) et la surface (17) du cylindre en fonction du calibre des végétaux à collecter, ladite distance étant configurée pour maintenir en contact la surface (17) du cylindre (15) et les végétaux ramassés sur la partie de faible inclinaison et étant déplacés le long du plateau (13) jusqu'à dépasser l'extrémité supérieure (14b).

2. Tête de ramassage selon la revendication 1, dans laquelle les moyens d'entraînement (12) comportent au moins deux cylindres (15) de sections différentes et disposés sur un même axe de rotation.

3. Tête de ramassage selon l'une ou l'autre des revendications 1 et 2 dans laquelle la surface (17) du cylindre comporte des reliefs (19) favorisant le déplacement des végétaux dans le sens de rotation du cylindre (15).

4. Tête de ramassage selon l'une quelconque des revendications 1 à 3 dans laquelle la surface (17) du cylindre est constituée d'un matériau déformable notamment de type élastomère.

5. Tête de ramassage selon l'une quelconque des revendications précédentes dans lequel le plateau incliné (13) est constitué de fils métalliques (18).

6. Tête de ramassage selon la revendication 5 dans lequel l'orientation des fils métalliques (18) permet un guidage des végétaux vers un centre et/ou l'extrémité supérieure (14b) du plateau (13).

7. Tête de ramassage selon l'une quelconque des revendications précédentes dans lequel les joues comportent des moyens d'articulation (11) aptes à autoriser un débattement angulaire entre la tête de ramassage (2) et le reste de l'unité de collecte (4) des végétaux.

8. Dispositif de collecte de végétaux tels que des melons comportant un châssis (3), une unité de collecte (4), et des moyens d'assujettissement (5) aptes à permettre la liaison du châssis (3) à un véhicule agricole (6), ladite unité de collecte (4) comportant une tête de ramassage (2) selon l'une quelconque des revendications précédentes.

9. Dispositif de collecte de végétaux selon la revendication 8 comportant des moyens de support de l'unité de collecte permettant de placer l'unité de collecte (4) en porte à faux de manière à limiter la force exercée par la tête de ramassage (2) sur le sol.

## Patentansprüche

1. Aufnahmekopf für eine Vorrichtung zum Ernten von Pflanzen, ausgewählt aus den Melonen oder den Kürbisgewächsen, und zwei seitliche Führungswangen (7) beinhaltend, die auf Rädern (10) montiert sind, und Übergabemittel (8) für die Pflanzen, die zwischen den Wangen (7) angeordnet sind, und imstande sind, die Pflanzen zu einem Förderer zu verschieben, wobei die Übergabemittel (8) Drehantriebsmittel (12) und eine geneigte Platte (13) beinhalten, und wobei die Antriebsmittel (12) mindestens einen motorisierten Zylinder (15) und Positionierungsmittel (16) des Zylinders über der Platte (13) beinhalten, **dadurch gekennzeichnet, dass**:
- die Platte eine Doppelneigung beinhaltet, wobei ein erster Teil mit geringer Neigung das Aufnehmen der Pflanzen ermöglicht, und ein unteres Ende (14a) beinhaltet und ein zweiter Teil mit erhöhter Neigung ein oberes Ende (14b) beinhaltet und, mit dem Zusammenwirken der Drehantriebsmittel (12) die Übergabe zu einem Förderer ermöglicht, und dadurch, dass
- die Positionierungsmittel (16) des oder der Zylinder(s) ermöglichen, einen Abstand D zwischen der Platte (13) und der Oberfläche (17) des Zylinders in Abhängigkeit vom Kaliber der zu erntenden Pflanzen anzupassen, wobei der Abstand konfiguriert ist, um die Oberfläche (17) des Zylinders (15) und die auf dem Teil mit geringer Neigung aufgenommenen, und entlang der Platte (13) verschobenen Pflanzen in Kontakt zu halten, bis das obere Ende (14b) überschritten wird.

2. Aufnahmekopf nach Anspruch 1, wobei die Antriebsmittel (12) mindestens zwei Zylinder (15) mit unterschiedlichen Querschnitten, und auf einer selben Drehachse angeordnet, beinhalten.

3. Aufnahmekopf nach dem einen oder anderen der Ansprüche 1 und 2, wobei die Oberfläche (17) des Zylinders Reliefs (19) beinhaltet, die das Verschieben der Pflanzen in der Drehrichtung des Zylinders (15) unterstützen.

4. Aufnahmekopf nach einem der Ansprüche 1 bis 3, wobei die Oberfläche (17) des Zylinders aus einem verformbaren Material, in besondere in der Art eines Elastomers besteht.

5. Aufnahmekopf nach einem der vorstehenden Ansprüche, wobei die geneigte Platte (13) aus Metalldrähten (18) besteht.

6. Aufnahmekopf nach Anspruch 5, wobei die Ausrichtung der Metalldrähte (18) eine Führung der Pflanzen zu einer Mitte und/oder dem oberen Ende (14b) der Platte (13) ermöglicht.

7. Aufnahmekopf nach einem der vorstehenden Ansprüche, wobei die Wangen Gelenkmittel (11) beinhalten, die imstande sind, einen Winkelausschlag zwischen dem Aufnahmekopf (2) und dem Rest der Ernteeinheit (4) der Pflanzen zu erlauben.

8. Vorrichtung zum Ernten von Pflanzen, wie Melonen, ein Gestell (3), eine Ernteeinheit (4), und Unterstellungsmittel (5) beinhaltend, die imstande sind, die Verbindung des Gestells (3) mit einem landwirtschaftlichen Fahrzeug (6) zu ermöglichen, wobei die Ernteeinheit (4) einen Aufnahmekopf (2) nach einem der vorstehenden Ansprüche beinhaltet.

9. Vorrichtung zum Ernten von Pflanzen nach Anspruch 8, Mittel zum Stützen der Ernteeinheit beinhaltend, die es ermöglichen, die Ernteeinheit (4) in einem Überhang zu platzieren, um die Kraft zu begrenzen, die durch den Aufnahmekopf (2) auf den Boden ausgeübt wird.

## Claims

1. A pick-up head for a device for collecting vegetables selected from among melons or cucurbits and including two guide lateral flanges (7) mounted on wheels (10) and means (8) for transferring the vegetables, disposed between said flanges (7), and adapted to move the vegetables towards a conveyor, the transfer means (8) including rotational drive means (12) and an inclined tray (13), and wherein the drive means (12) include at least one motor-driven cylinder (15) and means (16) for positioning the cylinder above the tray (13), **characterised in that**:
- the tray includes a double inclination, a first portion with a slight inclination enabling the pick-up of the vegetables and including a lower end (14a), and a second portion with a large inclination including an upper end (14b) and enabling, with the cooperation of the rotational drive means (12), transfer towards a conveyor, and **in that**
- the means (16) for positioning the cylinder(s) allow adjusting a distance D between the tray (13) and the surface (17) of the cylinder according to the size of the vegetables to be collected, said distance being configured to keep the surface (17) of the cylinder (15) and the picked-up vegetables in contact over the portion with a slight inclination and being moved along the tray (13) until overpassing the upper end (14b).

2. The pick-up head according to claim 1, wherein the drive means (12) include at least two cylinders (15) with different sections and disposed on the same axis of rotation.

3. The pick-up head according to either one of claims 1 and 2, wherein the surface (17) of the cylinder includes reliefs (19) promoting the movement of the vegetables in the direction of rotation of the cylinder (15).

4. The pick-up head according to any one of claims 1 to 3, wherein the surface (17) of the cylinder consists of a deformable material, in particular of the elastomer type.

5. The pick-up head according to any one of the preceding claims, wherein the inclined tray (13) is made up of metallic wires (18).

6. The pick-up head according to claim 5, wherein the orientation of the metallic wires (18) enables guidance of the vegetables towards a centre and/or the upper end (14b) of the tray (13).

7. The pick-up head according to any one of the preceding claims, wherein the flanges include hinge means (11) adapted to enable an angular movement between the pick-up head (2) and the rest of the vegetable-collecting unit (4) .

8. A device for collecting vegetables such as melons including a frame (3), a collecting unit (4), and coupling means (5) adapted to enable the connection of the frame (3) to an agricultural vehicle (6), said collecting unit (4) including a pick-up head (2) according to any one of the preceding claims.

9. The device for collecting vegetables according to claim 8, including means for supporting the collecting unit allowing placing the collecting unit (4) in a cantilevered manner so as to limit the force exerted by the pick-up head (2) on the ground.
